# EUROPEAN PATENT APPLICATION

(11) **EP 3 205 988 A1**
(43) Date of publication of application: **16.08.2017**
(21) Application number: 15849521.8
(22) Date of filing: 09.10.2015
(51) Int. Cl.: G01G 3/12, A47J 27/00, G01G 21/23

(54) **WEIGHT MEASUREMENT DEVICE AND COOKING EQUIPMENT PROVIDED WITH SAME**

(30) Priority: 09.10.2014 JP 2014207907
(71) Applicant: Panasonic Intellectual Property Management Co., Ltd., Osaka-shi, Osaka 540-6207 (JP)
(72) Inventor: OHTA, Katsuyuki, Osaka 540-6207 (JP); KAWAI, Hiroshi, Osaka 540-6207 (JP)
(74) Representative: Schwabe - Sandmair - Marx
(86) International application number: PCT/JP2015/005136
(87) International publication number: WO 2016/056245

(57) **Abstract**

Elastic support part (3) and weight detection unit (4) having weight detection element (9) are disposed between support stage (1) for supporting a load and load-receiving stage (2) for receiving a load in such a manner as to share and support the load exerted by load-receiving stage (2). Weight detection element (9) is an element for converting an elastic deviation to a load value. Spring constant Km of weight detection element (9) and spring constant Kn of elastic support part (3) are set to Km >> Kn. Furthermore, elastic support part (3) is provided with regulator part (8) that gives a flection amount of a preload according to a predetermined weight but does not regulate flection in a load direction of a load greater than the preload according to the predetermined weight.

## Description

### TECHNICAL FIELD

The present invention relates to a weight measurement device capable of precisely measuring the weight of an object to be measured, and cooking equipment provided with the same.

### BACKGROUND ART

Some cooking equipment such as a rice cooker or a microwave oven has the function of measuring the weight of a material to be cooked. In the case of a rice cooker, there is a rice cooker provided with a weight detection element disposed at a configuration for supporting the center of the bottom of a pan (see, for example, Patent Literature 1) or a rice cooker provided with weight detection elements at a plurality of legs disposed at a bottom surface that supports a rice cooker body (see, for example, Patent Literature 2). Moreover, in the case of a microwave oven, there is a microwave oven in which weight detection elements are configured at a plurality of supporters for supporting a food mount stage disposed inside of the oven (see, for example, Patent Literature 3). In general, as these weight detection elements is used a piezoelectric element or a load cell in which a distortion gauge is stuck to an elastic member so as to detect an elastic deviation amount based on a resistance change amount. The cooking equipment has the function of measuring a weight for the purpose of notifying a user of the optimum amount of rice to be put and a charge amount of water to be put or of measuring the served amount of cooked rice and the residual amount of cooked rice in the case of a rice cooker.

Materials to be cooked such as rice or water to be measured need to be put into a container such as a pan. Therefore, a weight measurement device such as a weight detection element having the function of measuring a weight is generally designed to measure a material to be cooked and measured together with the entire pan or cooking equipment, as described above.

In the meantime, a weight measurement device has been proposed to eliminate the influence of a load that is not to be measured, as described above, although it is a load sensor to be used for other applications (see, for example, Patent Literature 4).

In the above-described weight measurement device, a support member and a load detecting member are independently interposed between a support surface and an input surface, at which a load is exerted. The input surface is brought into direct contact with the support member. A clearance corresponding to an elastic deformation amount of the support member with respect to a predetermined load is formed between the input surface and the load detecting member. In addition, a spring constant Ks of the load detecting member and a spring constant Kb of the support member are set to the relationship of Ks ≤ Kb. This weight measurement device is directed to eliminating the influence of the load that is not to be measured and enhancing a relative detection precision of the load detecting member with respect to a load range to be measured.

As disclosed in, for example, Patent Literature 2, in the configuration in which weight detecting devices are disposed at the plurality of legs at the bottom of the rice cooker, the weight detecting devices need to measure about 10 kg that is the weight of the rice cooker body and about 2.5 kg or less of the weight of rice/water that can be cooked. In view of this, the dynamic range of the weight detection element requires performance by which at least 12.5 kg can be measured. In the case where a weight detecting device disclosed in Patent Literature 4 is incorporated, the support member only measures the weight of the rice cooker body per se due to the action on the weight detection element after elastic deformation. Therefore, the dynamic range of the weight detection element merely has performance by which at least up to 2.5 kg being the load range to be measured can be measured.

In general, the precision of the weight detection element has a variation of 0.1% or 1% with respect to the dynamic range. As a consequence, the weight detection element having a dynamic range of 12.5 kg at a precision of 0.1% has a variation of ±12.5 g based on 12.5 kg x 0.1%. In contrast, in the case of a dynamic range of 2.5 kg, a variation becomes ±2.5 g based on 2.5 kg x 0.1%. The above-described configuration enables the use of the weight detection element having a higher precision with respect to a target to be measured.

However, with this configuration, a load to be measured is independently supported by the support member and the load detecting member, and therefore, partial forces are generated at the support member and the load detecting member. As a consequence, when a measurement value from the load detecting member is to be corrected to be a net load to be measured, the following problems to be solved are raised. In the configuration disclosed in Patent Literature 4, the spring constants of the load detecting member and the support member are set such that the spring constant of the support member is greater. Therefore, in the case where the spring constant ratio is, for example, 1 : 1, the ratio between the partial forces exerted on the support member and the load detecting member becomes 1 : 1 as well. Thus, a correction coefficient from the measurement value by the load detecting member to a net value of a measurement target becomes "x2". However, at the time of the correction, the variation also is multiplied by the correction coefficient, and therefore, there arises a problem to be solved of an increase by ±5 g by multiplying a variation ±2.5 g of the aforementioned weight detection element by the correction coefficient.

Moreover, the clearance defined between the load detecting member and the input surface in Patent Literature 4 falls within an elastic range in which the support member starts from no deformation. In view of this, if the gravity position of the body load is deviated, a predetermined elastic deviation load of the support member is not loaded, thereby inducing no contact with the load detecting member. In this case, the ratio between the partial forces of the support member and the load detecting member is changed, and therefore, there arises a problem to be solved of the deviation of the correction coefficient so as to induce the impossibility of conversion to a net value.

The present invention provides a weight measurement device that can precisely correct a value to a net load value of a measurement target without exerting a load that is not to be measured to a weight detection element, and cooking equipment provided with the same.

### Citation List

### Patent Literature

PTL 1: Japanese Patent No. 4,171,692
PTL 2: Japanese Patent No. 2,500,547
PTL 3: Japanese Patent No. 4,206,283
PTL 4: Unexamined Japanese Patent Publication No. H08-285705

### SUMMARY OF THE INVENTION

In a weight measurement device according to the present invention, an elastic support part and a weight detection unit having a weight detection element are disposed between a support stage for supporting a load and a load-receiving stage for receiving a load in such a manner as to share and support the load exerted by the load-receiving stage. The weight detection element is an element for converting an elastic deviation to a load value. Spring constant Km of the weight detection element and spring constant Kn of the elastic support part are set to have the relationship of Km >> Kn. Furthermore, the elastic support part is provided with a regulator part that gives a flection amount of a preload according to a predetermined weight but does not regulate flection in a load direction of a load greater than the preload according to the predetermined weight.

With this configuration, the weight detection unit is exemplified by a weight detection unit in which the influence of a load that is not to be measured is suppressed, and the dynamic range of the weight detection element falls within almost a range of a measured load to be measured. Furthermore, the weight detecting unit receives most of the load to be measured so as to suppress a load to be received by the elastic support unit. Thus, it is possible to enhance conversion precision in correcting the load to be measured to a net value.

### BRIEF DESCRIPTION OF THE DRAWINGS

FIG. 1A is a view showing the configuration of a weight measurement device in a first exemplary embodiment of the present invention.
FIG. 1B is a view showing the configuration of the weight measurement device having a container mounted thereon in the first exemplary embodiment of the present invention.
FIG. 1C is a view showing the configuration of the weight measurement device having the container and an object to be measured mounted thereon in the first exemplary embodiment of the present invention.
FIG. 2 is a bottom view showing a main body of a rice cooker provided with the weight measurement device in the first exemplary embodiment of the present invention.
FIG. 3 is a vertical cross-sectional view showing the rice cooker provided with the weight measurement device in the first exemplary embodiment of the present invention.
FIG. 4 is a vertical cross-sectional view showing essential parts of the rice cooker provided with the weight measurement device in the first exemplary embodiment of the present invention.
FIG. 5 is a vertical cross-sectional view showing the rice cooker provided with the weight measurement device in the first exemplary embodiment of the present invention.
FIG. 6 is a bottom view showing a main body of a rice cooker provided with the weight measurement device in the first exemplary embodiment of the present invention.

### DESCRIPTION OF EMBODIMENT

A description will be given below of exemplary embodiments according to the present invention with reference to the attached drawings. Incidentally, the present invention is not limited to the exemplary embodiments.

### (FIRST EXEMPLARY EMBODIMENT)

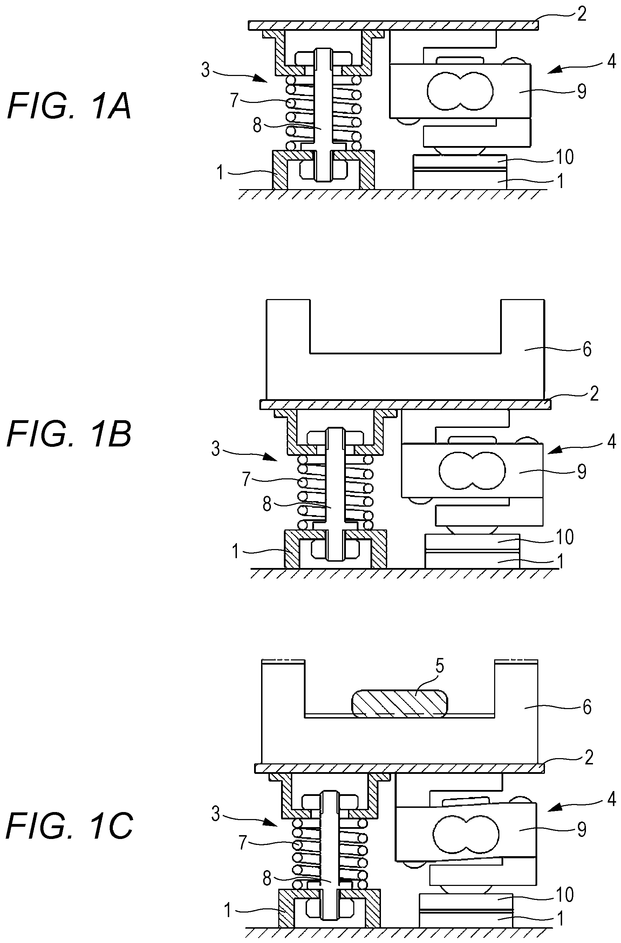

FIG. 1A, FIG. 1B, and FIG. 1C are views showing the basic configuration of a weight measurement device in a first exemplary embodiment of the present invention. As shown in FIG. 1A to FIG. 1C, load-receiving stage 2 that receives a load is disposed above support stage 1 that supports a load. Elastic support part 3 and weight detection unit 4 are interposed between support stage 1 and load-receiving stage 2, and thus, receive a load from load-receiving stage 2 in parallel. Moreover, container 6 that contains object 5 to be measured therein is mounted on load-receiving stage 2, wherein object 5 to be measured is a measurement target.

Coil spring 7 serving as an elastic member is incorporated in elastic support part 3. Regulator part 8 holds coil spring 7 such that coil spring 7 is contracted in a contraction direction by the same load as that of container 6 or less. Elastic support part 3 is configured such that coil spring 7 is freely contracted in a direction in which a load is further exerted.

Moreover, weight detection element 9 is incorporated in weight detection unit 4. Weight detection element 9 is exemplified by a load cell, in which a distortion gauge is stuck to an elastic metal member, and then, the resistance of the distortion gauge of the elastic deformation of the elastic metal member is detected and converted into a load value. Incidentally, the load cell may be replaced with a piezoelectric element or a capacitive element that produces elastic deformation. Weight detection unit 4 is provided with height adjuster 10 for adjusting a height in an initial height state of elastic support part 3. As shown in FIG. 1A, the upper and lower ends of elastic support part 3 and the upper and lower ends of weight detection unit 4 are kept mounted on support stage 1 and load-receiving stage 2 when the container 6 is not mounted on load-receiving stage 2.

Here, coil spring 7 that is much more flexible than the elastic metal member of weight detection element 9 is used such that spring constant Km of the elastic metal member of weight detection element 9 and spring constant Kn of coil spring 7 of elastic support part 3 establish the relationship of Km >> Kn.

Subsequently, a description will be given of the function of the basic principle of the configuration of the weight measurement device in the present exemplary embodiment.

First, as shown in FIG. 1A, in the state in which container 6 is not mounted on load-receiving stage 2, the weight of load-receiving stage 2 is much smaller than the initial flection load of coil spring 7 of elastic support part 3. Therefore, elastic support part 3 serves as a rigid part, thereby supporting load-receiving stage 2 without any contraction from a restriction height of coil spring 7, so as to prevent a load from being exerted on weight detection unit 4.

Next, as shown in FIG. 1B, when container 6 is mounted on load-receiving stage 2, weight W1 of container 6 slightly exceeds initial flection load W2 of coil spring 7 of elastic support part 3, so that coil spring 7 is somewhat deviated in a contraction direction, and thus, a load is exerted on weight detection unit 4 as well. Here, partial forces are obtained by dividing, to weight detection unit 4 and elastic support part 3, load W3 (= W1 - W2) obtained by subtracting the initial flection load of elastic support part 3 from the weight of container 6, and thus, one of the partial forces is exerted on weight detection unit 4. Partial force A1 of the subtracted load, exerted on weight detection unit 4 is expressed by W3 x Km/(Km + Kn) whereas partial force B1 exerted on elastic support part 3 is expressed by the correlation of a spring constant ratio obtained by the expression of W3 x Kn/(Km + Kn). In order to suppress the load produced therein, exerted on weight detection unit 4 as much as possible, the flection amount of elastic support part 3 is determined in consideration of deviation or variations at the time of assemblage so as to achieve as small a value of load W3 as possible.

As shown in FIG. 1C, when object 5 to be measured (load W4) serving as the measurement target is placed on container 6, partial force A2 of object 5 to be measured, exerted on weight detection unit 4 is expressed by W4 x Km/(Km + Kn) whereas partial force B2 exerted on elastic support part 3 is expressed by W4 x Kn/(Km + Kn), like the above-described partial forces. In the case where partial force A2 detected by weight detection unit 4 is converted into a net value of object 5 to be measured, its correction coefficient becomes (Km + Kn)/Km.

Here, a description will be given of the weight measurement device in the present exemplary embodiment by giving a numeric value to each of the settings.

The weight of load-receiving stage 2 is set to 100 g; the weight of container 6, to 9.9 kg; the maximum measurement range of the measurement target, to 2.5 kg; the initial flection load of elastic support part 3, to 9.8 kg; the spring constant of weight detection unit 4, to 9.5 kg/mm; and the spring constant of elastic support part 3, to 0.5 kg/mm.

First, when container 6 is mounted on load-receiving stage 2, a load of (9.9 kg + 100 g) - 9.8 kg = 200 g is exerted on weight detection unit 4 and elastic support part 3; the partial force exerted on weight detection unit 4 is 200 g x 9.5/(9.5 + 0.5) = 190 g; and the partial force exerted on elastic support part 3 is 200 g x 0.5/(9.5 + 0.5) = 10 g.

Subsequently, when object 5 to be measured having a load of 2.5 kg is placed, a partial force of (200 g + 2.5 kg) x 9.5/(9.5 + 0.5) = 2.565 kg is exerted on weight detection unit 4 whereas a load of (200 g + 2.5 kg) x 0.5/(9.5 + 0.5) = 135 g is exerted on elastic support part 3.

In order to convert the value detected by weight detection unit 4 into the net value of object 5 to be measured, the correction coefficient is multiplied by 2.375 kg obtained by subtracting 190 g that is the detection value when container 6 is mounted from 2.565 kg. Here, a correction coefficient of 2.5 kg/2.375 kg = the spring constant ratio : (9.5 + 0.5)/9.5 ≒ 1.053.

At this time, the precision of weight detection element 9 has certain variations with respect to the dynamic range of the element. With respect to the above-described measurement range, in the case where weight detection element 9 has a dynamic range of 3 kg and a precision of ±0.1%, variations of the corrected measurement value become 3 kg x ±0.1% x 1.053 = ±3.159 g. Thus, an increase is suppressed to 0.159 g in comparison with ±3 g before the correction.

Considering the state in which there is no elastic support part 3 under the same condition, when container 6 is placed on load-receiving stage 2, a load of (9.9 kg + 100 g) = 10 kg is exerted on weight detection unit 4. Subsequently, object 5 to be measured having a load of 2.5 kg is placed, a load of (10 kg + 2.5 kg) = 12.5 kg is exerted on weight detection unit 4 as it is. Therefore, on the assumption of the selection of a type in which the dynamic range of weight detection element 9 is 13 kg, a variation of 13 kg x 0.1% = 13 g is generated as long as the precision is the same.

In the above-described manner, when elastic support part 3 and weight detection unit 4 at which the initial flection is exerted to set a preload receive container 6 and object 5 to be measured, weight detection unit 4 is free from any influence of the load of container 6. As a consequence, the dynamic range of weight detection element 9 can fall within the measurement range of the measurement target, and therefore, variations of weight detection element 9 become small, thereby enhancing the measurement precision. The spring constant of weight detection unit 4 is set to be greater than that of elastic support part 3, so that the coefficient of the correction from the detection value by weight detection unit 4 to the net value of object 5 to be measured further approaches "1", and therefore, its conversion value, that is, the measurement precision of object 5 to be measured can be further enhanced.

Next, a description will be given of an exemplary embodiment in which the weight measurement device in the present exemplary embodiment is mounted on cooking equipment. Here, a rice cooker exemplifies the cooking equipment for the purpose of the description.

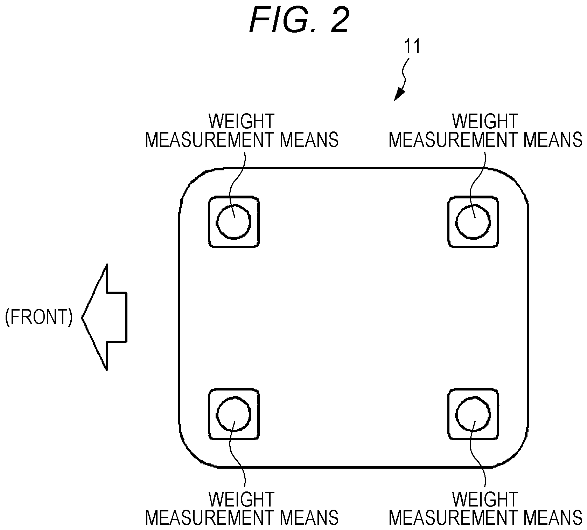

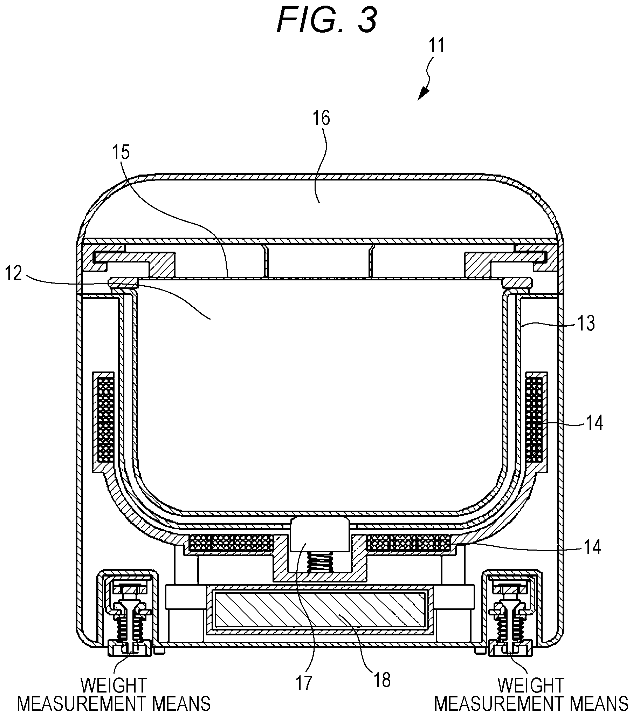

FIG. 2 is a bottom view showing a main body of a rice cooker provided with the weight measurement device in the first exemplary embodiment of the present invention. FIG. 3 is a vertical cross-sectional view showing the rice cooker provided with the weight measurement device in the first exemplary embodiment of the present invention.

As shown in FIG. 2 and FIG. 3, the weight measurement device is disposed at each of leg portions at four corners of the bottom surface of a rice cooker, and thus, the rice cooker is supported at four points as a whole. The sum of loads exerted on the weight measurement devices at the four points signifies the whole weight of the rice cooker.

Rice cooker body 11 is equivalent to "container 6" in the basic configuration of the above-described weight measurement device. "Rice" and "water" serving as object 5 to be measured are put into inner pan 12. Around inner pan 12 is disposed outer tank 13 serving as a protective frame. Around outer tank 13, electromagnetic coils 14 for generating electromagnetic inductive heating therearound are disposed at the side surface and bottom surface of outer tank 13. Inner cover 15 for closing an upper opening of inner pan 12 is fixed to cover member 16 turnably disposed at the upper portion of rice cooker body 11. Moreover, in order to measure the temperature of inner pan 12, temperature sensor 17 is provided in such a manner as to abut against the center portion of the bottom of inner pan 12 by the resiliency of a spring. Additionally, control circuit 18 that controls the electromagnetic inductive heating and calculates a signal output from a weight detecting device so as to display a weight is disposed at the bottom portion of rice cooker body 11.

Subsequently, a description will be given of the configuration of the weight measurement device in the rice cooker provided with the weight measurement device in the present exemplary embodiment.

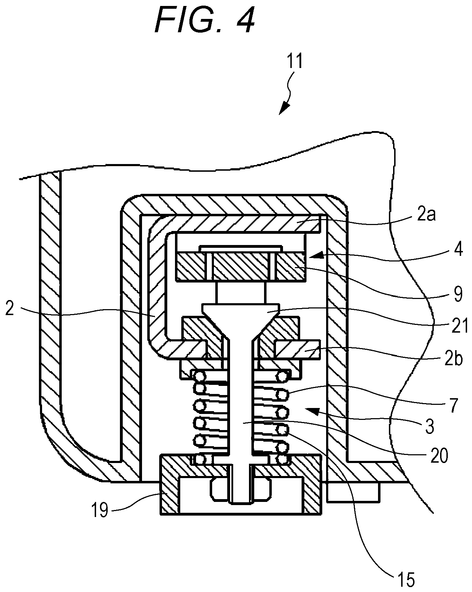

FIG. 4 is a vertical cross-sectional view showing essential parts of the rice cooker provided with the weight measurement device in the present exemplary embodiment.

As shown in FIG. 4, weight detection unit 4 incorporating weight detection element 9 therein is paired with elastic support part 3 using coil spring 7. Weight detection unit 4 is mounted on receiving surface 2a at the upper surface of load-receiving stage 2 that is formed into a substantially U shape in a vertically cross-sectional direction whereas elastic support part 3 is mounted on receiving surface 2b at the lower surface of load-receiving stage 2. The upper end of coil spring 7 of elastic support part 3 stays at a guide seat fixed to receiving surface 2b at the lower surface of load-receiving stage 2, thereby preventing lateral deviation. In addition, the lower end of coil spring 7 is mounted on support stage 19 having a guide. In coil spring 7, in order to give contraction according to a predetermined load obtained by dividing the weight of rice cooker body 11 by the disposed number, shaft-like regulator part 20 restricts a contraction amount, wherein the lower end of regulator part 20 is secured to support stage 19. The shaft of regulator part 20 is assembled through an opening formed at a part of receiving surface 2b at the lower surface of load-receiving stage 2, and furthermore, coil spring 7 can expand or contract in a load direction (i.e., downward) in which a load is exerted. Moreover, support stage 21, on which weight detection unit 4 is mounted, is disposed at the upper end of regulator part 20, so that weight detection unit 4 and elastic support part 3 are disposed coaxially with each other. Support stage 21 that is disposed at weight detection unit 4 serves as a rigid member via regulator part 20 secured to support stage 19. Support stage 19, regulator part 20, and support stage 21 configure an integral support unit.

With the above-described configuration, when rice cooker body 11 is placed at an installation site, the weight of rice cooker body 11 is applied to load-receiving stage 2. However, as explained by way of the basic configuration shown in FIG. 1A to FIG. 1C, flection having a predetermined load according to rice cooker body 11 is applied to elastic support part 3. In this manner, first, coil spring 7 receiving a preload between receiving surface 2b at the lower surface of load-receiving stage 2 and support stage 19 can receive the substantial weight of rice cooker body 11. A weight corresponding to a difference between the weight of rice cooker body 11 and the preload is supported by partial force A (not shown) exerted on weight detection unit 4 by receiving surface 2a at the upper surface of load-receiving stage 2 and partial force B (not shown) exerted on elastic support part 3 by receiving surface 2b at the lower surface of load-receiving stage 2. Weight detection units 4 are disposed in four points at the same pitch with respect to the gravity of rice cooker body 11. The partial forces exerted on the weight measurement devices are determined to be uniform. When "rice" and "water" serving as object 5 to be measured are put into inner pan 12, the weight of each of the "rice" and the "water" is equal to a partial load in a ratio between spring constant Km of weight detection element 9 and spring constant Kn of coil spring 7.

Here, as shown in FIG. 4, since weight detection unit 4 and elastic support part 3 are disposed coaxially with each other, the load exerted on each of weight detection unit 4 and elastic support part 3 at each point is divided from one point. Therefore, only the spring constant ratio determines the partial force and the correction coefficient to the net value of the measurement target, thus facilitating calculation processing.

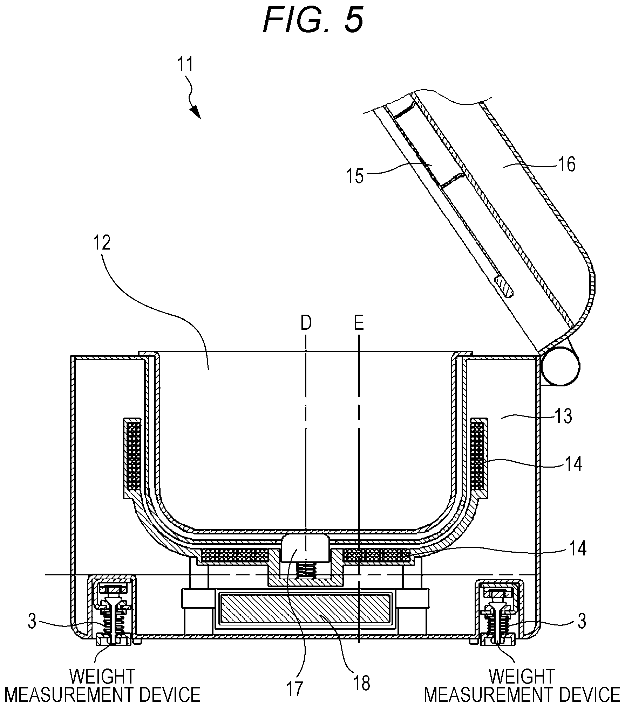

Next, a description will be given of another exemplary embodiment of a rice cooker provided with the weight measurement device in the present exemplary embodiment. FIG. 5 is a vertical cross-sectional view showing the rice cooker provided with the weight measurement device in the present exemplary embodiment.

Normally, in rice cooker body 11, when upper cover 16 is opened in a state in which cover 16 is closed, the gravity position of rice cooker body 11 is moved rearward, and thus, a load to be exerted on rear legs is increased. In view of this, the weights of "rice", "water", and "cooked rice" to be measured are restrictively measured only in the state in which cover 16 is opened. As shown in FIG. 5, spring constants become the same by using identical coil springs 7 at elastic support parts 3 at a weight measurement device at two fore points (on the left side in FIG. 5) and elastic support parts 3 at a weight measurement device at two rear points (on the right side in FIG. 5) of rice cooker body 11. Moreover, the setting rate of a preload by regulator part 20 is set to a predetermined load according to the weight distribution of rice cooker body 11 in the state in which the cover 16 is opened. The installation height of the weight measurement device is adjusted by a difference in contraction of coil spring 7 so that rice cooker body 11 can be horizontally placed.

In the above-described manner, the measurement is restricted only in the state in which a measurement target is being put in or taken out, and therefore, an influence of the weight of rice cooker body 11 on weight detection unit 4 can be uniformly stabilized, thus keeping a load. In addition, the dynamic range of weight detection element 9 can approach the measurement range of the measurement target, thus enhancing the measurement precision of object 5 to be measured. Here, FIG. 5 shows gravity position D of rice cooker body 11 in the state in which cover 16 is closed whereas gravity position E of rice cooker body 11 in the state in which cover 16 is opened.

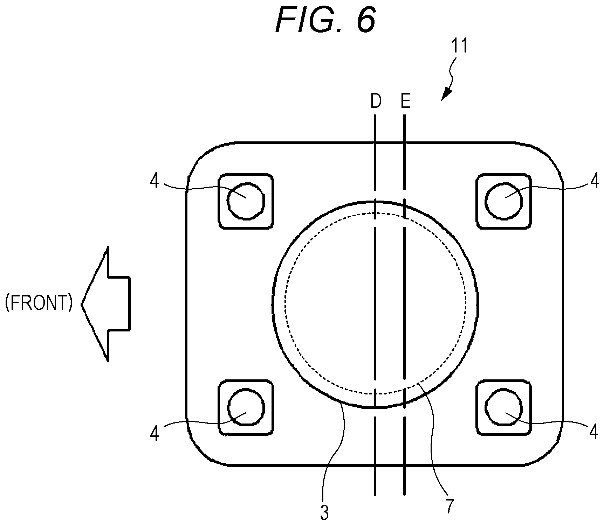

Next, apart from the above-described two exemplary embodiments, a description will be given of a constitutional example of an exemplary embodiment in another combination disposition of weight detection unit 4 and elastic support part 3. FIG. 6 is a bottom view showing a main body of a rice cooker provided with the weight measurement device in the first exemplary embodiment of the present invention.

As shown in FIG. 6, elastic support part 3 is disposed at the gravity position of rice cooker body 11, and then, weight detection units 4 are disposed at four corners around elastic support part 3. Elastic support part 3 is designed to receive a load of rice cooker body 11 by single coil spring 7. As shown in FIG. 6, the diameter of coil spring 7 is set in such a manner as to cover gravity position D of rice cooker body 11 in the state in which cover 16 is closed and gravity position E of rice cooker body 11 in the state in which cover 16 is opened.

With this configuration, elastic support part 3 is located at one portion, and therefore, the number of component parts can be reduced. At the same time, coil spring 7 of elastic support part 3 has a coil diameter in such a manner that the gravity position shifted by opening or closing cover 16 stays sufficiently inward of coil spring 7. As a consequence, single elastic support part 3 can satisfactorily suppress an inclination caused by the deviation of rice cooker body 11. Therefore, an influence of rice cooker body 11, to be exerted on weight detection unit 4 can be stably suppressed. Moreover, since buckling caused by the great diameter of coil spring 7 nearly occurs, the influence on weight detection unit 4 can be suppressed, thus leading to the enhancement of the measurement precision of object 5 to be measured.

In this manner, elastic support part 3 and weight detection unit 4 whose preloads are set are adapted to receive rice cooker body 11 and object 5 to be measured so that weight detection unit 4 nearly undergoes the influence of the weight of rice cooker body 11. As a consequence, the dynamic range of weigh detecting element 9 is set to the measurement range of a measurement target, thereby reducing variations of the element per se, so as to enhance the measurement precision. It is possible to enhance the measurement precision of converted object 5 to be measured by setting the spring constant of weight detection unit 4 higher than that of elastic support part 3.

As described above, in the weight detecting device according to the present invention, an elastic support part and a weight detection unit having a weight detection element are disposed between a support stage for supporting a load and a load-receiving stage for receiving a load in such a manner as to share and support the load exerted from the load-receiving stage. The weight detection element is an element for converting an elastic deviation amount to a load value, and a spring constant Km of the weight detection element and a spring constant Kn of the elastic support part establish a relationship of Km » Kn. Furthermore, a regulator part that gives a flection amount of a preload according to a predetermined weight but does not regulate flection in a load direction of a load greater than the preload according to the predetermined weight.

With this configuration, a device that suppresses an influence of a load that is not a measurement target, in which the dynamic range of the weight detection element is substantially equivalent to the measurement load range of the measurement target, is applicable to the weight detection unit. In addition, most of the load rate of the measurement target is received by the weight detection unit, and the elastic support part nearly receives the load, and therefore, the correction value of the measurement target with respect to the net value can get closer to "1", thus suppressing an increase in variations of the weight detection element at the time of the conversion.

Moreover, according to the present invention, a container that contains an object to be measured serving as a measurement target is placed on the load-receiving stage, and the regulator part disposed at the elastic support part gives flection of a preload according to the predetermined weight of the container. This configuration achieves precise measurement without an influence of the weight of the container that is not a measurement target.

Additionally, according to the present invention, the elastic support part and the weight detection unit are mounted on the support stage and the load-receiving stage, respectively, in a state in which there is no load of the container. With this configuration, even if the load exerts at a deviated position on the load-receiving stage, the weight detection unit can securely detect the load range of the measurement target.

In addition, according to the present invention, the elastic support part is disposed at the gravity position of the container, and a plurality of weight detection units are disposed around the gravity position. With this configuration, the weight detection unit can uniformly exert the load, and furthermore, receives the load at a plurality of points, and therefore, the container can be stably supported.

Furthermore, according to the present invention, the elastic support part is paired with the weight detection unit, a plurality of pairs are disposed under the load-receiving stage, and the regulator part is determined such that the elastic support part gives a preload of a weight obtained by dividing a predetermined weight according to the container by a number of the elastic support parts disposed. With this configuration, a deviation occurs on the loads of the container and content. Even if the partial force of a support load is deviated, the ratio between the partial forces of the elastic support part and the weight detection unit is the same at each position, and therefore, the measurement can be carried out without an influence on the sum of values detected by the weight detection unit.

Moreover, according to the present invention, the elastic support part is paired with the weight detection unit, and a plurality of pairs are disposed under the load-receiving stage. The preload of the elastic support part is set to a preload according to a ratio between partial forces in a lengthwise or lateral direction according to the relationship between the disposed positions of the pairs and the gravity position of the container, and a height of the pairs is adjusted such that the load-receiving stage becomes horizontal. With this configuration, when the object to be measured is placed, the receiving stage is horizontally descended, and therefore, the load can be uniformly exerted on a plurality of weight detection units. Thus, a similar element having the same dynamic range can be used.

Furthermore, the present invention provides cooking equipment including the above-described weight measurement device disposed at a portion where a lower portion of a body of the cooking equipment contacts a floor. Consequently, an object to be measured serving as a measurement target can be precisely measured even in cooking equipment having a weight, for example, four times or more the weight range of a measurement target.

### INDUSTRIAL APPLICABILITY

As described above, since the elastic support part and the weight detection unit whose preloads are set receive the container and the object to be measured in the weight measurement device according to the present invention, the weight detection unit nearly undergoes the influence of the load of the container. As a consequence, the dynamic range of the weight detecting element is set to the measurement range of a measurement target, thereby reducing variations of the element per se, so as to enhance the measurement precision. Furthermore, it is possible to enhance the measurement precision of the converted object to be measured by setting the spring constant of the weight detection unit higher than that of elastic support part. Hence, the weight measurement device according to the present invention is applicable in a wide field including the cooking equipment.

### REFERENCE MARKS IN THE DRAWINGS

- 1: Support stage
- 2: Load-receiving stage
- 3: Elastic support part
- 4: Weight detection unit
- 5: Object to be measured
- 6: Container
- 7: Coil spring
- 8, 20: Regulator part
- 9: Weight detection element
- 19, 21: Support stage

## Claims

1. A weight measurement device comprising:
an elastic support part;
a weight detection unit having a weight detection element;
wherein
the elastic support part and the weight detection unit are disposed between a support stage for supporting a load and a load-receiving stage for receiving a load in such a manner as to share and support the load exerted from the load-receiving stage,
the weight detection element is an element for converting an elastic deviation amount to a load value,
a spring constant Km of the weight detection element and a spring constant Kn of the elastic support part establish a relationship of Km >> Kn,
the elastic support part is provided with a regulator part that gives a flection amount of a preload according to a predetermined weight but does not regulate flection in a load direction of a load greater than the preload according to the predetermined weight.

2. The weight measurement device according to claim 1, wherein
a container that contains an object to be measured serving as a measurement target is placed on the load-receiving stage, and
the regulator part disposed at the elastic support part gives flection of a preload according to a predetermined weight of the container.

3. The weight measurement device according to claim 1 or claim 2, wherein
the elastic support part and the weight detection unit are mounted on the support stage and the load-receiving stage, respectively, in a state in which there is no load of the container.

4. The weight measurement device according to any one of claims 1 to 3, wherein
the elastic support part is disposed at the gravity position of the container, and
a plurality of the weight detection units are disposed around the gravity position.

5. The weight measurement device according to any one of claims 1 to 3, wherein
the elastic support part is paired with the weight detection unit,
a plurality of the pairs are disposed under the load-receiving stage, and
the regulator part is determined such that the elastic support part gives a preload of a weight obtained by dividing a predetermined weight according to the container by a number of the elastic support parts disposed.

6. The weight measurement device according to claim 5, wherein
in a configuration in which the elastic support part is paired with the weight detection unit and a plurality of the pairs are disposed under the load-receiving stage, the preload of the elastic support part is set to a preload according to a ratio between partial forces in a lengthwise or lateral direction according to the relationship between the disposed positions of the pairs and the gravity position of the container, and a height of the pairs is adjusted such that the load-receiving stage becomes horizontal.

7. Cooking equipment comprising
the weight measurement device according to any one of claims 1 to 6, the weight measurement device being disposed at a position where a lower portion of a body of the cooking equipment contacts a floor.
